# EUROPEAN PATENT SPECIFICATION

(11) **EP 1 566 314 B1**
(45) Date of publication and mention of the grant of the patent: **26.05.2010**
(21) Application number: 05003437.0
(22) Date of filing: 17.02.2005
(51) Int. Cl.: B60R 21/20, B29C 59/00

(54) **Method of manufacturing an airbag cover and corresponding ultrasonic processing device**
Verfahren zum Herstellen einer Airbagabdeckung und entsprechende Vorrichtung
Procédé de fabrication d'un couvercle d'airbag et dispositif de fabrication correspondant

(30) Priority: 19.02.2004 JP 2004042540
(43) Date of publication of application: 24.08.2005
(73) Proprietor: TAKATA CORPORATION, Minato-ku, Tokyo 106-8510 (JP)
(72) Inventor: Soejima, Naoki, Minato-ku Tokyo 106-8510 (JP)
(74) Representative: Banzer, Hans-Jörg

(56) References cited:
- EP-A- 1 162 054
- EP-A- 1 493 548

## Description

The present invention relates to a technology of manufacturing an airbag cover for covering a vehicle airbag.

### Background Art

In an airbag device installed in a vehicle, an airbag cover for covering a vehicle airbag is commonly provided. In the airbag cover, a tear line (linear groove) is provided in its inner wall surface. Accordingly, at the time of a vehicle collision, the tear line is ripped open, and then the vehicle airbag is allowed to be deployed and expanded outside the airbag cover. Here, as a technology for providing the tear line in the airbag cover by means of a post processing, for example, a technology which uses laser cuts is well known (for example, see PCT Japanese Translation Patent Publication No. 2001-502996). In this document, it is suggested that the tear line can be formed using the laser cuts. In the case of mass-producing the airbag cover, however, a technology which is effective for conveniently forming the tear line in the airbag cover at low cost is highly demanded.

EP 1 162 054 describes a method of manufacturing an airbag cover for covering a vehicle airbag, in which a linear groove having a depth in a range of the plate thickness of the airbag cover is formed by means of ultrasonic processing means. This document further describes an ultrasonic processing device for manufacturing an airbag cover for covering a vehicle airbag, comprising an ultrasonic oscillator for generating an ultrasonic wave of a predetermined frequency, an ultrasonic processing blade for performing an ultrasonic processing of the airbag cover, an ultrasonic amplitude element for transferring ultrasonic waves generated by the ultrasonic oscillator to the ultrasonic processing blade, a driving unit including driving means for adjusting the ultrasonic processing blade, and a control unit.

### Problems to be Solved by the Invention

The present invention is made in consideration of the above problem, and it is an object of the present invention to provide a manufacturing technology capable of suitably manufacturing an airbag cover for covering a vehicle airbag.

### Means for Solving the Problems

According to the invention, this object is achieved by a method of manufacturing an airbag cover as defined in claim 1 and an ultrasonic processing device defined in claim 3. The dependent claims define preferred and advantageous embodiments of the invention.

The invention is a technology which can be applied to manufacture airbags for various vehicles such as a car, a trolley car, a motorcycle (a vehicle equipped with a motorcycle seat), an aircraft, a vessel and the like.

A method of manufacturing an airbag cover according to the invention relates to a method of manufacturing an airbag cover for covering a vehicle airbag installed in various vehicles.

In the manufacturing method, an airbag cover is processed by means of ultrasonic processing means such that a linear groove is consecutively formed in the airbag cover. Typically, to the resultant airbag cover after molding, a processing is performed using the ultrasonic processing means, thereby forming the linear groove. The linear groove means that a groove having a depth in a range of the plate thickness of a plate-shaped airbag cover is consecutively formed. The linear groove has a thickness relatively smaller than other portions of the airbag cover, and is referred to as a so-called tear line. At the time of a vehicle collision, the airbag cover is ripped open along the tear line such that the vehicle airbag is deployed and expanded.

The method of manufacturing an airbag cover of the present invention relates to a method of processing the airbag cover by means of the ultrasonic processing means, and comprises at least a profiling teaching step and a processing step. In the present invention, in addition to the profiling teaching step and the processing step, other steps may be incorporated into the method of manufacturing an airbag cover.

Moreover, 'the ultrasonic processing device' or 'the ultrasonic processing means' described in the present specification broadly includes a device having a configuration which is capable of transferring (providing) ultrasonic waves to a workpiece, thereby processing the workpiece. Typically, the ultrasonic processing means includes a configuration which, by directing a blade-shaped member (ultrasonic processing blade) onto the workpiece, performs an ultrasonic processing (grinding processing) on the workpiece. As an example other than the blade-shaped member, ultrasonic processing means having a bar shape or a plate shape may be used. Further, as a typical processing device which uses the ultrasonic processing means, a device having a configuration in which motions by the ultrasonic processing blade with which the ultrasonic waves are provided are controlled by a processing robot may be exemplified. If so, the processing motions by the ultrasonic processing blade are controlled to follow a desired trace.

In the profiling teaching step of the present invention, a processing trace corresponding to the linear groove is formed in an airbag cover side member, and simultaneously, based on profiling data obtained by profiling an teaching object along the processing trace, processing data is taught to the ultrasonic processing means or learned by the ultrasonic processing means. By performing the profiling teaching step in which the teaching object profiles along the processing trace, processing data is taught to the ultrasonic processing means.

Moreover, as 'the airbag cover side member' in which the processing trace is formed, the airbag cover itself may be used or a supporting member for supporting the airbag cover from its bottom may be used. More specifically, the processing trace is formed in a processing surface of the airbag cover or an airbag cover supporting surface of the supporting member such that the teaching object profiles along the processing trace.

In the present invention, as an aspect in which the teaching object profiles along the processing trace, an aspect in which plural points are sequentially pressed by means of a front end portion of the teaching object, such that the teaching object moves, may be used. Alternatively, an aspect in which the teaching object is made to move in a consecutive shape such that the front end portion of the teaching object slides on the processing trace may be used. Further, the teaching object which performs the profiling teaching may be comprised of the ultrasonic processing means itself such as the processing blade which is used for the ultrasonic processing. Also, it may be comprised of a member to be exclusively used for teaching, which follows the ultrasonic processing means. In the case in which the member to be exclusively used for teaching is used as the teaching object, at the time of an actual processing, the ultrasonic processing means may be changed for the member.

Further, in the present invention, profiling data obtained by the profiling motion of the teaching object is stored in a control unit of the ultrasonic processing means. At this time, profiling data may be stored automatically in the control unit of the ultrasonic processing means according to the profiling motion of the teaching object. Alternatively, profiling data may be substituted with a predetermined program language and directly input to the control unit.

Further, in the present invention, as processing data which is to be taught to the ultrasonic processing means, data such as a position, an angle, a moving trace, or a grinding pattern of the ultrasonic processing means such as the processing blade is used. Processing data may accord with profiling data. Also, processing data is modified data to be obtained by modifying the profiling data. More specifically, in the case in which the supporting member is used as the airbag cover side member, modified data to be obtained by modifying profiling data with respect to the thickness of the airbag cover is used as processing data.

In the processing step of the present invention, by controlling the ultrasonic processing means based on processing data taught in the profiling teaching step, the linear groove is formed in the airbag cover. By performing the processing step, the linear groove having a depth in a range of the plate thickness of the airbag cover is formed with respect to the airbag cover for covering the vehicle airbag.

As described above, according to the invention, by the profiling teaching step in which the teaching object profiles along the airbag cover side member, processing data of the airbag cover is created. Thus, it is effective in reducing the equipment cost, without needing a converter which converts CAD data into CAM data (NC operating data) or an NC control unit which performs a processing based on CAM data. Further, in the present invention, since processing data is obtained by profiling an actual object, it is effective in simplifying a teaching sequence for teaching the ultrasonic processing means.

An embodiment of the present invention for solving the above problem relates to a method of manufacturing an airbag cover.

In the method of manufacturing an airbag cover according to the embodiment, the profiling teaching step of the present invention comprises at least the following first to fourth steps. In the present invention, each of the first to fourth steps may be further subdivided.

The first step is a step of profiling the teaching object along the processing trace which is formed on the airbag cover supporting surface of the airbag cover supporting member serving as the airbag cover side member, thereby obtaining profiling data. In the first step, the airbag cover supporting member for supporting the airbag cover from its bottom is used as the airbag cover side member, and, at the time of the profiling motion of the teaching object, the processing trace is formed in the airbag cover supporting surface of the airbag cover supporting member.

The second step is a step of modifying profiling data obtained in the first step with respect to the thickness of the airbag cover and teaching modified data to the ultrasonic processing means. In the second step, the airbag cover supporting surface of the airbag cover supporting member serves as a reference surface for the profiling teaching. And then, on the assumption that the airbag cover is actually set on the airbag cover supporting surface (the reference surface), modified data is obtained by offsetting data by a predetermined thickness of the airbag cover from the airbag cover supporting surface. Typically, a position which is offset by a thickness in a bottom of the linear groove upward from the airbag cover supporting surface (the reference surface) is used as an assumed processing position of the airbag cover.

The third step is a step of controlling the ultrasonic processing means based on the modified data taught in the second step to manufacture a trial airbag cover product. In the third step, the trial airbag cover product is manufactured as actual processed goods based on the modified data.

The fourth step is a step of measuring the dimensions of the trial airbag cover product manufactured in the third step and correcting the modified data based on measurement results to generate processing data. In the fourth step, the dimensions of the respective portions of the trial airbag cover product manufactured based on the modified data are measured, and the modified data is corrected based on the measurement. Moreover, in the case in which there is no need for correcting the modified data, the modified data itself is used as processing data. Meanwhile, in the case in which the correction of the modified data is needed, data after the modified data is corrected is used as processing data.

As described above, according to the embodiment of the invention, only if processing data is obtained by profiling the teaching object along the processing trace of the airbag cover supporting member, in the subsequent step, a desired linear groove can be formed in the airbag cover by controlling the ultrasonic processing means based on processing data. Thus, it is possible to simplify the step of providing the linear groove in the airbag cover, and it is possible to reduce the manufacturing cost. The present invention is particularly effective in the case of mass-producing the airbag cover having the linear groove.

According to the invention, the ultrasonic processing device for manufacturing an airbag cover for covering an vehicle airbag comprises a driving unit and a control unit. The driving unit includes a driving arm, an ultrasonic amplitude element, an teaching object or an ultrasonic processing blade, an ultrasonic oscillator, displacement meters and an image examining camera. To obtain processing data the ultrasonic processing blade is replaced by the teaching object which profiles the teaching line formed in the airbag cover supporting surface in order to obtain the processing data. Finally the ultrasonic processing device performs an ultrasonic processing of the airbag cover based on the obtained processing data, the teaching object having been replaced by the ultrasonic processing blade before.

According to the invention, the ultrasonic processing device may be configured to implement the methods of manufacturing an airbag cover described above.

### Advantages

As described above, according to the present invention, in the case of manufacturing the airbag cover in which the linear groove is formed by means of the ultrasonic processing means, the processing trace corresponding to the linear groove is formed in the airbag cover side member, and simultaneously, processing data is obtained by profiling the teaching object along the processing trace. Thus, it becomes possible to simply manufacture the airbag cover at low cost.

### Brief Description of the Drawings

Fig. 1 is a diagram showing configurations of an airbag cover 100 and an ultrasonic processing device 200 which is used for the processing of the airbag cover 100, according to an embodiment of the present invention, and it also shows a state of an ultrasonic processing of the airbag cover 100 which is performed by using the ultrasonic processing device 200.
Fig. 2 is a flowchart of an ultrasonic processing treatment step by means of the ultrasonic processing device 200 according to the embodiment of the present invention.
Fig. 3 is a flowchart of a profiling teaching step in Fig. 2.
Fig. 4 is a flowchart of a processing step in Fig. 2.
Fig. 5 is a diagram schematically showing a treatment state in a step S13 of Fig. 3.
Fig. 6 is a diagram schematically showing a treatment state in a step S22 of Fig. 4.
Fig. 7 is a diagram schematically showing treatments states in steps S23 and 26 of Fig. 4.
Fig. 8 is a diagram schematically showing a treatment state in a step S25 of Fig. 4.
Fig. 9 is a diagram schematically showing a treatment state in a step S25 of Fig. 4.
Fig. 10 is a cross-sectional view showing a configuration of an airbag module, and it also shows an opened state of a tear line 102 of an airbag cover 100.

### Best Mode for Carrying Out the Invention

Hereinafter, an embodiment of the present invention will be described with reference to the drawings. Moreover, the present embodiment relates to a technology for forming a tear line 102 in a cover back surface 101 of an airbag cover 100, which covers a vehicle airbag, using an ultrasonic processing. The airbag cover 100 corresponds to 'an airbag cover' in the present invention.

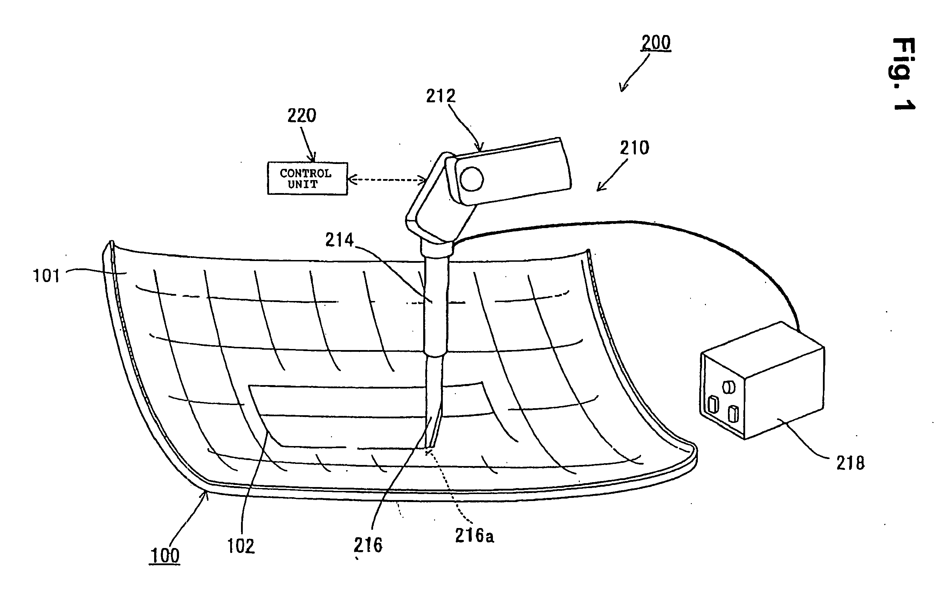

First, configurations of the airbag cover 100 and an ultrasonic processing device 200 will be described with reference to Fig. 1. Here, Fig. 1 is a diagram showing the configurations of the airbag cover 100 and the ultrasonic processing device 200, which is used to process the airbag cover 100, according to the present embodiment. Also, Fig. 1 shows a state of an ultrasonic processing of the airbag cover 100, the ultrasonic processing being performed using the ultrasonic processing device 200.

The airbag cover 100 shown in Fig. 1 has a three-dimensional plate shape and is made of a resin material such as a PP (polypropylene) material or a TPO (olefin-based elastomer) material. In a state in which the airbag cover 100 is provided, when a side facing a passenger is a front surface, the cover back surface 101 of the airbag cover 100 is defined as a surface of a back side thereof. The tear line 102 is a thinned portion which is provided to allow the airbag cover 100 to be ripped open when the vehicle airbag (a vehicle airbag 150 described below) is deployed and expanded. In the present embodiment, the tear line 102 is comprised of a linear groove which is formed in the cover back surface 101 of the airbag cover 100. The tear line 102 corresponds to 'a linear groove' in the present invention.

As shown in Fig. 1, the ultrasonic processing device 200 comprises a driving unit 210 including a driving arm 212, an ultrasonic amplitude element 214, an ultrasonic processing blade 216 and an ultrasonic oscillator 218, and a control unit 220. Further, the ultrasonic processing device 200 of the present embodiment comprises displacement meters 221 and 222 described below, and an image examining camera 223. The ultrasonic processing device 200 corresponds to 'an ultrasonic processing means' in the present invention.

The driving arm 212 is provided to configure a portion of a processing robot and is controlled based on an input signal from the control unit 220, such that a position, an angle, a processing trace, or the like of a blade front end 216a of the ultrasonic processing blade 216 can be adjusted.

The ultrasonic amplitude element 214 has a function of transferring ultrasonic waves oscillated in the ultrasonic oscillator 218 to the ultrasonic processing blade 216.

The ultrasonic processing blade 216 is a processing blade which is used to form the tear line 102 in the cover back surface 101 of the airbag cover 100. In the present embodiment, for example, a processing blade having a blade width of 1 mm may be used. Moreover, it is necessary that a member transfers (provides) the ultrasonic waves to a workpiece such that the processing of the workpiece may be performed. Thus, in addition to a blade-shaped member such as the ultrasonic processing blade 216, for example, a bar-shaped member or a plate-shaped member may be used.

The ultrasonic oscillator 218 is an oscillator having a function capable of oscillating an ultrasonic wave of a predetermined frequency. In the present embodiment, for example, an oscillator having a configuration capable of oscillating an ultrasonic wave of a frequency of 22 kHz may be used.

The control unit 220 is configured to store processing data obtained by the ultrasonic processing blade 216. As processing data, data regarding a position, an angle, a moving trace, etc. of the driving arm 212 or a grinding pattern at the time of the ultrasonic processing, which are obtained in 'a profiling teaching step' described below is included.

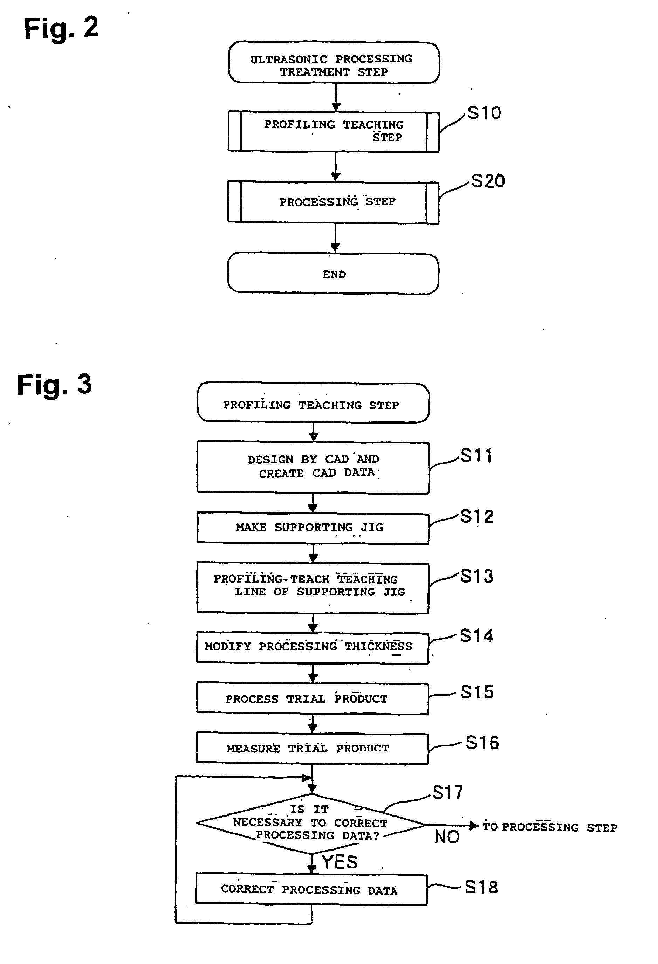

Next, a sequence of a processing step in which the tear line 102 is formed in the molded airbag cover 100 by means of a post processing and use of the above-mentioned ultrasonic processing device 200 will be described with reference to Figs. 2 to 9.

Fig. 2 shows a flowchart of an ultrasonic processing treatment step by means of the ultrasonic processing device 200 of the present embodiment.

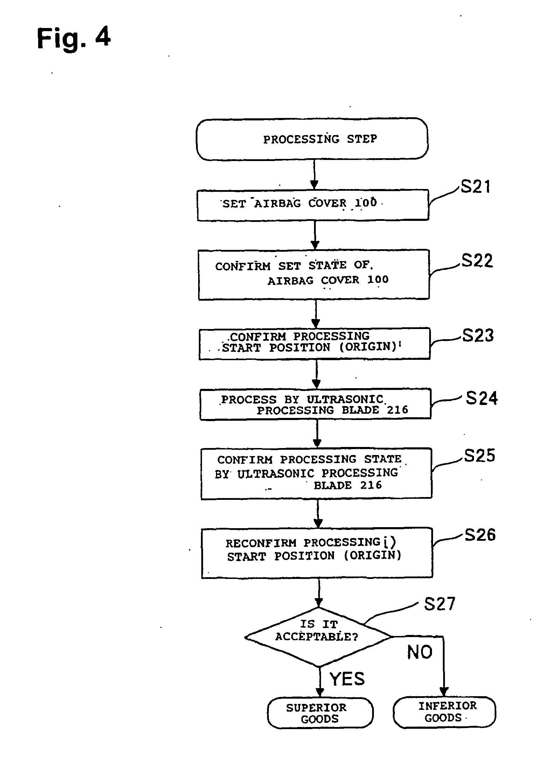

As shown in Fig. 2, 'the ultrasonic processing treatment step' according to the processing of the airbag cover 100 of the present embodiment is broadly divided into 'a profiling teaching step' (Step S10) in which processing data before the processing is analyzed, and 'a processing step' (Step S20) in which the processing is actually performed using the ultrasonic processing device. In 'the profiling teaching step', steps S11 to s18 shown in Fig. 3 are sequentially performed, and in 'the processing step', steps S21 to S27 shown in Fig. 4 are sequentially performed.

### Profiling Teaching Step

The profiling teaching step is a step of obtaining data, regarding a position, an angle, or a moving trace of the ultrasonic processing blade 216 at the time of the ultrasonic processing, as processing data, before an actual ultrasonic processing of the airbag cover 100 (tear line processing) is performed.

Fig. 3 shows a flowchart of the profiling teaching step in Fig. 2.

As shown in Fig. 3, in the profiling teaching step, first, in the step S11, a design is performed by CAD (computer-aided design) based on design information of the airbag cover 100, and then CAD data is created. Here, for example, design information which is previously stored in a computer is displayed on a graphic display, and a user performs the design while viewing the screen. In the step S12, based on CAD data obtained in the step S11, an airbag cover supporting jig 130 having a shape which is suitable for the ultrasonic processing of the airbag cover 100 (tear line processing) is manufactured.

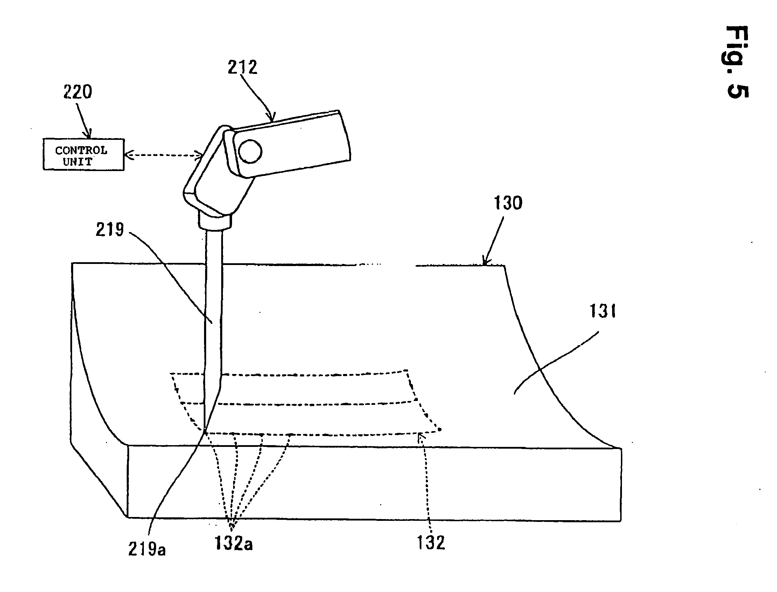

Here, Fig. 5 schematically shows a treatment state in the step S13 of Fig. 3.

As shown in Fig. 5, the airbag cover supporting jig 130 manufactured in the step S13 of Fig. 3 has an airbag cover supporting surface 131 for supporting the airbag cover 100 from its bottom. The airbag cover supporting surface 131 of the airbag cover supporting jig 130 has a shape corresponding to a front surface of the airbag cover 100. Further, on the airbag cover supporting jig 130, in particular, an air suction mechanism, which is not shown, is mounted. The suction mechanism is operated, such that the airbag cover 100 is maintained in a suction state on the airbag cover supporting surface 131. Further, in the suction mechanism of the airbag cover supporting jig 130, suction pressure detecting means (not shown) capable of detecting a suction pressure is provided. The airbag cover supporting jig 130 corresponds to 'the airbag cover supporting member' or 'the airbag cover side member' in the present invention.

In the present embodiment, when the step S13 of Fig. 3 is performed, a teaching line 132 is formed in the airbag cover supporting surface 131 of the airbag cover supporting jig 130. The teaching line 132 is a processing trace corresponding to the tear line 102, and, in the present invention, it corresponds to 'the processing trace'.

In the step S13 of Fig. 3, in order to obtain processing data by the ultrasonic processing blade 216, the profiling teaching is performed with respect to the control unit 220. More specifically, a teaching member 219 profiles the teaching line 132 formed in the airbag cover supporting surface 131, such that profiling data regarding a position, an angle or a moving trace of the ultrasonic processing blade 216 at the time of the processing is obtained. The teaching member 219 is a member which follows the ultrasonic processing blade 216 and which is installed in the driving arm 212, instead of the ultrasonic processing blade 216, when the profiling teaching is performed. The teaching member 219 moves such that a front end portion 219a thereof sequentially presses a plurality of teaching press points 132a on the teaching line 132, and thus the profiling teaching is made with respect to the control unit 220. And then, profiling data is automatically stored in the control unit 220. Moreover, the teaching member 219 may be made to move in a consecutive shape such that the front end portion 219a slides on the teaching line 132, thereby performing the profiling teaching. The teaching member 219 corresponds to 'the teaching object' in the present invention.

The step S13 is a step of profiling the teaching member 219 along the teaching line 132 formed in the airbag cover supporting surface 131 of the airbag cover supporting jig 130, thereby obtaining (deriving) profiling data. The step S13 corresponds to 'the first step' in the present invention.

In the step S13, profiling data obtained by the profiling teaching is changed into modified data modified by a processing thickness of the airbag cover 100 in the step S14. That is, in the step S13, the airbag cover supporting surface 131 of the airbag cover supporting jig 130 serves as the reference surface for the profiling teaching. Thus, on the assumption that the airbag cover 100 is actually set on the airbag cover supporting surface 131 (the reference surface), data which is offset by a predetermined thickness of the airbag cover 100 from the airbag cover supporting surface 131 is made into modified data (in the present invention, corresponding to 'modified data'). Typically, a position which is offset upward by the thickness in a bottom of the tear line 102 from the airbag cover supporting surface 131 becomes an assumed processing position of the airbag cover 100. Modified data obtained in the step S14 is taught to (stored in) the control unit 220.

The step S14 is a step of modifying profiling data obtained in the step S13 with respect to the thickness of the airbag cover 100 and teaching modified data to the control unit 220, and, in the present invention, corresponds to 'the second step'.

Next, in the step S15 of Fig. 3, based on modified data obtained in the step S14, the driving arm 212 is controlled via the control unit 220, and a trial product of the airbag cover 100 (in the present invention, corresponding to 'the trial airbag cover product') is actually manufactured. At this time, the teaching member 219 used for the profiling teaching is changed for the ultrasonic processing blade 216. The manufacture of the trial airbag cover product is performed when an input signal corresponding to modified data obtained in the step S14 is transferred from the control unit 220 to the driving arm 212. The step S15 is a step of controlling the driving arm 212 based on modified data taught in the step S14 to manufacture the trial product of the airbag cover 100, and, in the present invention, it corresponds to 'the third step'.

Further, in the step S16, actual dimensions of the trial airbag cover product manufactured in the previous step S15 are measured. And then, in the step S17, it is determined whether or not there is a need for correcting processing data of the driving arm 212, based on dimension measurement results of the trial product in the step S16. If it is determined that there is a need for correcting data (YES in the step S17), data is corrected in the step S18, and the process returns to the step S17. That is, modified data stored in the control unit 220 in the step S14 is updated into corrected data obtained in the step S18 and corrected data is taught to the control unit 220 as processing data. To the contrary, if it is determined that there is no need for correcting data (NO in the step S17), 'the profiling teaching step' is ended, and then the process is progressed to 'the processing step' of Fig. 4. In this case, modified data which is stored in the control unit 220 is not updated to corrected data and it itself is taught to the control unit 220 as processing data.

The steps S16 to S18 are steps of measuring dimensions of the trial product of the airbag cover 100 manufactured in the step S15 and correcting modified data based on measurement results to generate processing data. In the present invention, the steps S16 to S18 correspond to 'the fourth step'.

As described above, the profiling teaching step of the present embodiment is a step of forming the teaching line 132 corresponding to the tear line 102 in the airbag cover supporting jig 130, and simultaneously, based on profiling data obtained by profiling the teaching member 219 along the teaching line 132, teaching processing data to the control unit 220. In the present invention, this step corresponds to 'the profiling teaching step'.

### Processing Step

The processing step is a step of performing an actual ultrasonic processing (tear line processing) of the airbag cover 100, based on processing data obtained in the above-mentioned profiling teaching step (the steps S11 to S18).

Fig. 4 shows a flowchart of the processing step in Fig. 2.

As shown in Fig. 4, in the processing step, first, in the step S21, the airbag cover 100 is set on the airbag cover supporting surface 131 of the airbag cover supporting jig 130 in Fig. 5. In the step S21, the suction mechanism (not shown) of the airbag cover supporting jig 130 is operated.

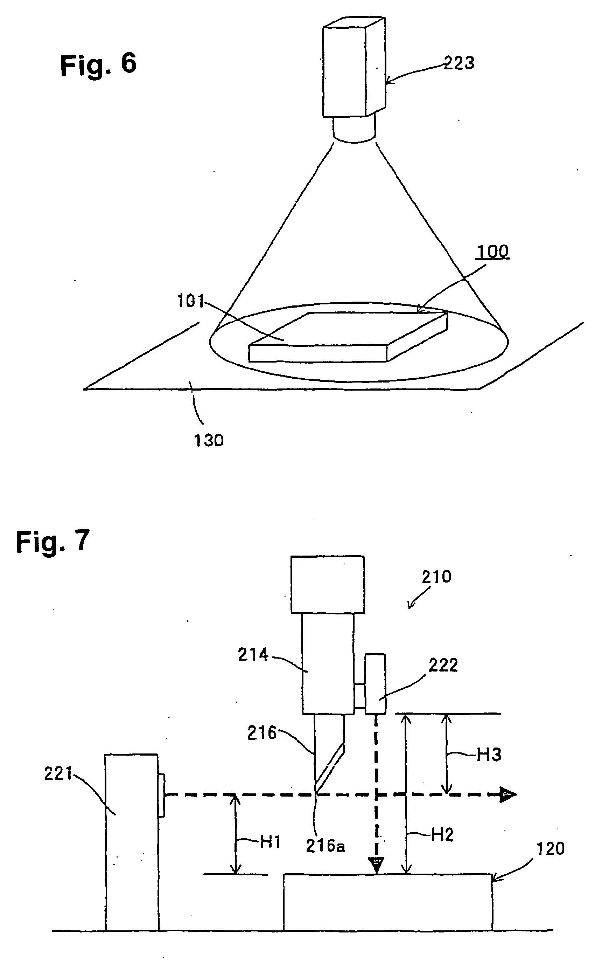

Further, in the step S22, a set state of the airbag cover 100 is confirmed. In the step S22, an adhesion state between the airbag cover 100 and the airbag cover supporting jig 130 is confirmed by means of the suction pressure which is detected by the suction pressure detecting means (not shown). Further, as shown in Fig. 6, by using the image examining camera 223, a positional variation of the airbag cover 100 is confirmed. Thus, it is possible for an operator to confirm the set state of the airbag cover 100.

Next, in the step S23, a processing start position (origin) of the ultrasonic processing blade 216 before the processing is confirmed. At the time of the confirmation, for example, the laser-type displacement meters 221 and 222 are used. The displacement meter 221 is provided at a base, and the displacement meter 222 is provided at the ultrasonic processing blade 216 of the driving unit 210. In such a configuration, as shown in Fig. 7, a height H1 (distance) from an upper surface of a reference block 120 up to the blade front end 216a of the ultrasonic processing blade 216 is detected by means of the displacement meter 221. Meanwhile, a height H2 (distance) from the upper surface of the reference block 120 up to the displacement meter 222 is detected by means of the displacement meter 222. And then, by calculating a difference (H2 - H1) between the height H1 and the height H2 detected, a height H3 from the displacement meter 222 up to the blade front end 216a of the ultrasonic processing blade 216 is obtained (derived). Thus, the processing start position (the origin) of the ultrasonic processing blade 216 is determined.

Moreover, the number of detection points of the height H1 by means of the displacement meter 221 and the height H2 by means of the displacement meter 222 in the step S23 may be set in consideration of a shape of the airbag cover 100 or the like. For example, as the shape of the airbag cover 100 is complex, it is preferable to increase the number of the detection points of the heights H1 and H2.

Next, in the step S24, the actual ultrasonic processing (tear line processing) is started by means of the ultrasonic processing blade 216. The processing is performed when an input signal corresponding to processing data obtained in the step S14 or processing data updated in the step S18 is transferred from the control unit 220 to the driving arm 212. At this time, the ultrasonic oscillator 218 oscillates ultrasonic waves of frequencies of 22 kHz, and the ultrasonic waves are transferred to the ultrasonic processing blade 216 via the ultrasonic amplitude element 214. And then, based on the input signal from the control unit 220, the driving arm 212 is controlled, and the position, the angle or the moving trace of the blade front end 216a of the ultrasonic processing blade 216 is adjusted. Thus, the processing motions by the ultrasonic processing blade 216 are controlled to follow a desired trace. A processing speed by the ultrasonic processing blade 216 can be set to, for example, 30 mm/sec. Such a processing speed is one and a half times faster than a processing speed by a laser processing, that is, 20 mm/sec. Therefore, it is effective in improving production efficiency of the airbag cover 100.

Moreover, processing conditions, such as the frequency of the ultrasonic wave to be oscillated from the ultrasonic oscillator 218 or the processing speed of the ultrasonic processing blade 216, can be suitably set based on conditions of the workpiece, such as the material of the airbag cover or a plate thickness.

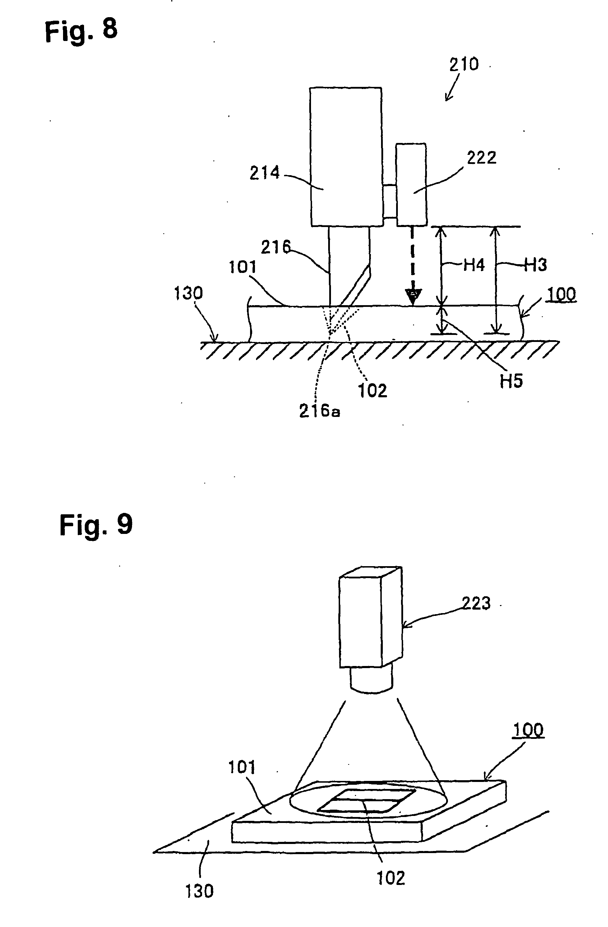

In the step S25, at the time of the ultrasonic processing by means of the ultrasonic processing blade 216 in the step S24 (during processing), a processing state by means of the ultrasonic processing blade 216 is confirmed. Here, as shown in Fig. 8, a height H4 (distance) from the cover back surface 101 of the airbag cover 100 up to the displacement meter 222 is detected by means of the displacement meter 222.

And then, by calculating a difference between the height H3 which is previously detected in the step S23 (the height from the displacement meter 222 up to the blade front end 216a of the ultrasonic processing blade 216) and the height H4, a processing depth (grinding depth) H5 of the tear line 102 is obtained (derived). As described above, in the present embodiment, the processing depth H5 of the tear line 102 is not directly detected. Instead, the processing depth H5 of the tear line 102 is indirectly inferred based on other detection information. Further, based on the processing depth H5 and data regarding controls of the control unit 220, it is possible to confirm a remaining thickness of the airbag cover 100 at any positions of the tear line 102. Thus, the airbag cover 100 in which the tear line 102 having a desired processing depth is consecutively formed is manufactured. If the shape of the airbag cover as the workpiece is three-dimensionally complex, there may be a case in which it is difficult to detect directly the processing depth H5 of the tear line 102. However, in the present embodiment, information regarding the processing depth H5 of the tear line 102 is detected hourly, and thus the processing depth H5 is derived with high reliability. Therefore, it is effective in reliably processing the tear line 102 having a desired depth, in particular, with respect to the three-dimensionally molded airbag cover.

Moreover, in the step S25, the number of detection points of the height H4 by means of the displacement meter 222 may be suitably set in consideration of the shape of the airbag cover 100 or the like. For example, as the shape of the airbag cover 100 is complex, it is possible to increase the number of the detection points of the height H4. Further, as shown in Fig. 9, by using the image examining camera 223, the processing trace of the tear line 102 is confirmed.

In the step S26, the processing start position (the origin) of the ultrasonic processing blade 216 is reconfirmed by the same operation as that of the step S23.

Finally, in the step S27, it is determined whether or not the ultrasonic processing of the airbag cover 100 is acceptable. If it is determined that the ultrasonic processing of the airbag cover 100 is acceptable (YES in the step S27), the airbag cover 100 is referred to as 'superior goods'. To the contrary, if it is determined that the ultrasonic processing of the airbag cover 100 is not acceptable (NO in the step S27), the airbag cover 100 is referred to as 'inferior goods'.

Thus, by repetitively performing the steps S21 to S27, the airbag covers 100 in each of which the tear line 102 is formed in the cover back surface 101 by means of the ultrasonic processing are mass-produced.

As described above, the processing step of the present embodiment is a step of controlling the ultrasonic processing device 200 based on processing data taught in the profiling teaching step, and forming the tear line 102 to the airbag cover 100. In the present invention, this step corresponds to 'the processing step'.

As described above, according to the present embodiment, processing data of the airbag cover 100 is created by means of the profiling teaching step in which the teaching member 219 profiles the airbag cover supporting jig 130. Thus, without needing a converter which converts CAD data into CAM data (NC operating data) or an NC control unit which performs the processing based on CAM data, it is possible to reduce the equipment cost. Further, in the present invention, since processing data is obtained by profiling an actual thing, it is effective to simplify the teaching sequence.

Further, according to the above-mentioned embodiment, in the profiling teaching step, only if processing data is obtained, in the subsequent step, the desired tear line 102 can be formed in the airbag cover 100 by controlling the driving arm 212 based on processing data. Thus, it is possible to simplify the step of providing the tear line 102 in the airbag cover 100, and it is possible to reduce the manufacturing cost. The ultrasonic processing device 200 of the present embodiment is particularly effective in the case of mass-producing the airbag covers 100 each having the tear line 102.

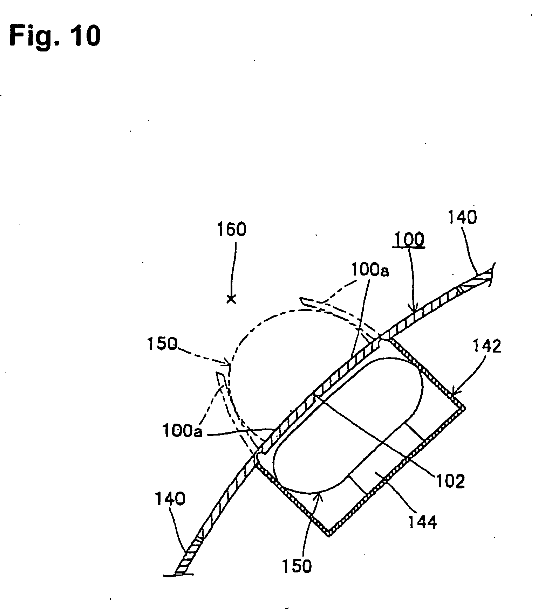

Moreover, the airbag cover 100 manufactured by the above-mentioned manufacturing method may be incorporated into a vehicle, for example, as shown in Fig. 10. That is, an airbag module comprises the airbag cover 100, an instrument panel 140 in which the airbag cover 100 is disposed, a vehicle airbag 150 (in the present invention, corresponds to 'the vehicle airbag'), a housing (retainer) 142 in which the vehicle 150 is housed in a folded state, and gas supply means 144 which is embedded in the housing 142 and supplies an expansion gas to the vehicle airbag 150.

At the time of a vehicle collision, the gas supply means 144 is operated, and then, by means of the expansion gas supplied from the gas supply means 144, the vehicle airbag 150 is deployed. When the vehicle airbag 150 is deployed and expanded, the airbag cover 100 is ripped open along the tear line 102. Here, for example, a pair of deploying doors 101a is disposed toward a cover front surface in a double-swinging manner. Thus, the vehicle airbag 150 is deployed via the deploying doors 100a in deployed states to the outside of the airbag cover 100, and deployed and expanded while projecting toward a passenger protection region 160 which is formed in front of a passenger.

### Other Embodiments

The present invention is not limited only to the above-mentioned embodiment, but various modifications or applications can be made. For example, the following embodiments to which the above-mentioned embodiment is applied may be implemented.

In the above-mentioned embodiment, the case in which the teaching line 132 for the profiling teaching which corresponds to the tear line 102 is formed in the airbag cover supporting surface 131 of the airbag cover supporting jig 130 is described. Alternatively, in the present invention, the teaching line of the profiling teaching may be formed in the airbag cover 100 itself.

Further, in the above-mentioned embodiment, the case in which, at the time of the profiling teaching, instead of the ultrasonic processing blade 216, the teaching member 219 is used for the profiling teaching is described. Alternatively, in the present invention, the ultrasonic processing blade 216 itself may be used for the profiling teaching.

Further, in the above-mentioned embodiment, the case in which profiling data obtained by profiling the teaching member 219 along the teaching line 132 is automatically stored in the control unit 220 is described. Alternatively, in the present invention, profiling data obtained by profiling the teaching member 219 along the teaching line 132 may be substituted with other program language and may be directly stored in the control unit 220.

## Claims

1. A method of manufacturing an airbag cover (100) for covering a vehicle airbag (150), in which a linear groove (102) having a depth in a range of the plate thickness of the airbag cover (100) is formed by means of ultrasonic processing means (200), the method comprising:
a profiling teaching step (S10) of forming a processing trace (132) corresponding to the linear groove (102) in an airbag cover side member (130) and of teaching processing data to the ultrasonic processing means (200) based on profiling data which is obtained by moving a teaching object (219) along the processing trace (132); and
a processing step (S20) of forming the linear groove (102) in the airbag cover (100) by controlling the ultrasonic processing means based on the processing data taught in the profiling teaching step (S10).

2. The method of manufacturing an airbag cover according to Claim 1,
wherein the profiling teaching step (S10) comprises:
a first step (S13) of moving the teaching member (219) along the processing trace formed on an airbag cover supporting surface (131) of an airbag cover supporting member serving as the airbag cover side member (130) to obtain profiling data;
a second step (S14) of modifying profiling data obtained in the first step (S13) with respect to the thickness of the airbag cover (100) and teaching modified data to the ultrasonic processing means (200);
a third step (S15) of manufacturing a trial airbag cover product by controlling the ultrasonic processing means (200) based on the modified data taught in the second step (S14); and
a fourth step (S16-S18) of measuring dimensions of the trial airbag cover product manufactured in the third step (S15) and correcting the modified data based on the measurement to generate processing data.

3. An ultrasonic processing device for manufacturing an airbag cover (100) for covering a vehicle airbag (150), comprising
an ultrasonic oscillator (218) for generating an ultrasonic wave of a predetermined frequency,
an ultrasonic processing blade (216) for performing an ultrasonic processing of the airbag cover (100),
an ultrasonic amplitude element (214) for transferring ultrasonic waves generated by the ultrasonic oscillator (218) to the ultrasonic processing blade (216),
a driving unit (210) including driving means (212) for adjusting the ultrasonic processing blade (216), and a control unit (220),
wherein the ultrasonic processing device (200) is configured such that a teaching object (219) is moved by said driving unit (210) along a teaching line (132) formed in an airbag cover supporting surface (131) in order to obtain processing data, and
wherein the ultrasonic processing device (200) is configured such that an ultrasonic processing of the airbag cover (100) is performed by said ultrasonic processing blade (216) based on the obtained processing data.

4. The ultrasonic processing device according to Claim 3,
wherein the driving means comprises a driving arm (212).

5. The ultrasonic processing device according to Claim 3 or Claim 4,
wherein the ultrasonic processing device (200) further comprises displacement measuring means (221, 222, 223) for detecting a displacement of the ultrasonic processing blade (216).

6. The ultrasonic processing device according to Claim 5,
wherein the displacement measuring means comprise a displacement meter (221, 222) and an image examining camera (223).

7. The ultrasonic processing device according to any one of Claims 3-6,
wherein the ultrasonic processing device (200) is configured to carry out the method according to Claim 1 or Claim 2.

## Patentansprüche

1. Verfahren zur Herstellung einer Airbag-Abdeckung (100) zur Abdeckung eines Fahrzeug-Airbags (150), wobei eine lineare Vertiefung (102) mit einer Tiefe in einem Bereich der Plattendicke der Airbag-Abdeckung (100) mittels Ultraschall-Bearbeitungsmitteln (200) ausgebildet wird, wobei das Verfahren umfasst:
einen Profilierungs-Lernschritt (S10) zur Ausbildung einer Bearbeitungsspur (132), welche der linearen Vertiefung (102) entspricht, in einem Airbag-Abdeckungs-Seitenteil (130) und zum Weiterleiten von Bearbeitungsdaten zu den Ultraschall-Bearbeitungsmitteln (200) abhängig von Profilierungsdaten, welche erhalten werden, indem ein Lernobjekt (219) entlang der Bearbeitungsspur (132) bewegt wird; und
einen Bearbeitungsschritt (S20) zur Ausbildung der linearen Vertiefung (102) in der Airbag-Abdeckung (100), indem die Ultraschall-Bearbeitungsmittel abhängig von den Bearbeitungsdaten, welche in dem Profilierungs-Lernschritt (S10) gelernt werden, gesteuert werden.

2. Verfahren zur Herstellung einer Airbag-Abdeckung nach Anspruch 1,
**dadurch gekennzeichnet,**
**dass** der Profilierungs-Lernschritt (S10) umfasst:
einen ersten Schritt (S13), um das Lernteil (219) entlang der Bearbeitungsspur zu bewegen, welche auf einer Airbag-Abdeckungs-Auflageoberfläche (121) eines Airbag-Abdeckungs-Auflageteils ausgebildet wird, welches als das Airbag-Abdeckungs-Seitenteil (130) dient, um Profilierungsdaten zu erhalten;
einen zweiten Schritt (S14), um die Profilierungsdaten, welche in dem ersten Schritt (S13) erhalten werden, abhängig von der Dicke der Airbag-Abdeckung (100) zu ändern und die geänderten Daten an die Ultraschall-Bearbeitungsmittel (200) weiterzuleiten;
einen dritten Schritt (S15), um ein Probe-Airbag-Abdeckungsprodukt herzustellen, indem die Ultraschall-Bearbeitungsmittel (200) abhängig von den veränderten Daten, welche in dem zweiten Schritt (S14) gelernt werden, gesteuert werden; und
einen vierten Schritt (S16-S18), um Abmessungen des Probe-Airbag-Abdeckungsprodukts, welches in dem dritten Schritt (S15) hergestellt wird, abzumessen und die modifizierten Daten abhängig von der Messung zu verändern, um die Bearbeitungsdaten zu erzeugen.

3. Ultraschall-Bearbeitungsvorrichtung zur Herstellung einer Airbag-Abdeckung (100), um einen Fahrzeug-Airbag (150) abzudecken, umfassend
einen Ultraschall-Oszillator (218), um Ultraschallwellen einer vorbestimmten Frequenz zu erzeugen,
eine Ultraschall-Bearbeitungsklinge (216), um eine Ultraschall-Bearbeitung der Airbag-Abdeckung (100) durchzuführen,
ein Ultraschall-Amplitudenelement (214), um Ultraschallwellen, welche von dem Ultraschall-Oszillator (218) erzeugt werden, an die Ultraschall-Bearbeitungsklinge (216) weiterzuleiten,
eine Antriebseinheit (210), welche Antriebsmittel (212) aufweist, um die Ultraschall-Bearbeitungsklinge (216) einzustellen, und
eine Steuereinheit (220),
wobei die Ultraschall-Bearbeitungsvorrichtung (200) derart ausgestaltet ist, dass ein Lernobjekt (219) von der Antriebseinheit (210) entlang einer Lernlinie (132), welche in einer Airbag-Abdeckungs-Auflageoberfläche (131) ausgebildet ist, bewegt wird, um Bearbeitungsdaten zu erhalten, und
wobei die Ultraschall-Bearbeitungsvorrichtung (200) derart ausgestaltet ist, dass eine Ultraschallbearbeitung der Airbag-Abdeckung (100) durch die Ultraschall-Bearbeitungsklinge (216) abhängig von den erhaltenen Bearbeitungsdaten durchgeführt wird.

4. Ultraschall-Bearbeitungsvorrichtung nach Anspruch 3, **dadurch gekennzeichnet, dass** die Antriebsmittel einen Antriebsarm (212) umfassen.

5. Ultraschall-Bearbeitungsvorrichtung nach Anspruch 3 oder Anspruch 4, **dadurch gekennzeichnet, dass** die Ultraschall-Bearbeitungsvorrichtung (200) darüber hinaus Versetzungs-Messmittel (221, 222, 223) umfasst, um ein Versetzen der Ultraschall-Bearbeitungsklinge (216) zu erfassen.

6. Ultraschall-Bearbeitungsvorrichtung nach Anspruch 5, **dadurch gekennzeichnet, dass** die Versetzungs-Messmittel ein Versetzungs-Messgerät (221, 222) und eine Bilder überprüfende Kamera (223) umfassen.

7. Ultraschall-Bearbeitungsvorrichtung nach einem der Ansprüche 3 bis 6, **dadurch gekennzeichnet, dass** die Ultraschall-Bearbeitungsvorrichtung (200) zur Durchführung des Verfahrens nach Anspruch 1 oder Anspruch 2 ausgestaltet ist.

## Revendications

1. Un procédé de fabrication d'un couvercle (100) de coussin de sécurité gonflable pour couvrir un coussin de sécurité gonflable de véhicule (150), dans lequel une rainure linéaire (102) présentant une profondeur de l'ordre de grandeur de l'épaisseur de plaque du couvercle (100) de coussin de sécurité gonflable est formée par des moyens de traitement à ultrasons (200), le procédé comprenant :
une étape d'enseignement de profilage (S10) de formation d'une trace de traitement (132) correspondant à la rainure linéaire (102) dans un organe latéral (130) de couvercle de coussin de sécurité gonflable et d'enseignement des données de traitement aux moyens de traitement à ultrasons (200) sur la base de données de profilage obtenues par déplacement d'un objet d'enseignement (219) le long de la trace de traitement (132) ; et
une étape de traitement (S20) de formation de la rainure linéaire (102) dans le couvercle (100) de coussin de sécurité gonflable par contrôle des moyens de traitement à ultrasons sur la base des données de traitement enseignées lors de l'étape d'enseignement de profilage (S10).

2. Le procédé de fabrication d'un couvercle de coussin de sécurité gonflable selon la revendication 1,
dans lequel l'étape d'enseignement de profilage (S10) comprend :
une première étape (S13) de déplacement de l'objet d'enseignement (219) le long de la trace de traitement formée sur une surface de support de couvercle de coussin de sécurité gonflable (131) d'un organe de support de couvercle de coussin de sécurité gonflable agissant comme organe latéral de couvercle de coussin de sécurité gonflable (130) pour obtenir des données de profilage ;
une deuxième étape (S14) de modification des données de profilage obtenues lors de la première étape (S13) par rapport à l'épaisseur du couvercle de coussin de sécurité gonflable (100) et à enseigner des données modifiées au moyens de traitement à ultrasons (200) ;
une troisième étape (S15) de fabrication d'un produit d'essai de couvercle de coussin de sécurité gonflable par contrôle des moyens de traitement à ultrasons (200) sur la base des données modifiées enseignées lors de la deuxième étape (S14) ; et
une quatrième étape (S 16 à S 18) de mesure des dimensions du produit d'essai de couvercle de coussin de sécurité gonflable fabriqué lors de la troisième étape (S15) et de correction des données modifiées sur la base des mesures pour générer des données de traitement.

3. Un dispositif de traitement à ultrasons pour la fabrication d'un couvercle (100) de coussin de sécurité gonflable pour couvrir un coussin de sécurité gonflable de véhicule (150), comprenant
un oscillateur ultrasonore (218) pour la génération d'une onde ultrasonore d'une fréquence prédéterminée,
une lame de traitement à ultrasons (216) pour réaliser un traitement à ultrasons sur le couvercle de coussin de sécurité gonflable (100),
un élément d'amplitude ultrasonore (214) pour transférer les ondes ultrasonores générées par l'oscillateur ultrasonore (218) à la lame de traitement à ultrasons (216),
une unité de commande (210) comprenant des moyens de commande (212) pour régler la lame de traitement à ultrasons (216), et
une unité de contrôle (220),
dans lequel le dispositif de traitement à ultrasons (200) est configuré pour le déplacement, au moyen de ladite unité de commande (210), d'un objet d'enseignement (219) le long d'une ligne d'enseignement (132) formée dans une surface de support de couvercle de coussin de sécurité gonflable (131) pour obtenir des données de traitement, et
dans lequel le dispositif de traitement à ultrasons (200) est configuré pour réaliser, au moyen de ladite lame de traitement à ultrasons (216) un traitement à ultrasons du couvercle de coussin de sécurité gonflable (100) sur la base des données de traitement obtenues.

4. Le dispositif de traitement à ultrasons selon la revendication 3, dans lequel les moyens de commande comprennent un bras de commande (212).

5. Le dispositif de traitement à ultrasons selon la revendication 3 ou la revendication 4,
dans lequel le dispositif de traitement à ultrasons (200) comprend en outre des moyens de mesure de déplacement (221, 222, 223) pour détecter un déplacement de la lame de traitement à ultrasons (216).

6. Le dispositif de traitement à ultrasons selon la revendication 5, dans lequel les moyens de mesure de déplacement comprennent un compteur de déplacement (221, 222) et une caméra d'examen d'images (223).

7. Le dispositif de traitement à ultrasons selon l'une quelconque des revendications 3 à 6,
dans lequel le dispositif de traitement à ultrasons (200) est configuré pour mettre en oeuvre le procédé selon la revendication 1 ou la revendication 2.
